# EUROPEAN PATENT SPECIFICATION

(11) **EP 2 715 876 B1**
(45) Date of publication and mention of the grant of the patent: **08.07.2015**
(21) Application number: 12727108.8
(22) Date of filing: 22.05.2012
(51) Int. Cl.: H01R 13/52, B60L 11/18

(54) **ELECTRICAL CONNECTOR HOUSING AND DEVICE FOR VEHICLE CHARGING SYSTEM**
GEHÄUSE FÜR EINEN ELEKTRISCHEN VERBINDER UND VORRICHTUNG FÜR EIN FAHRZEUGAUFLADESYSTEM
BOÎTIER DE CONNECTEUR ÉLECTRIQUE ET DISPOSITIF POUR SYSTÈME DE CHARGE DE VÉHICULE

(30) Priority: 27.05.2011 WO PCT/IB2011/001588
(43) Date of publication of application: 09.04.2014
(73) Proprietor: Delphi International Operations Luxembourg S.à r.l., 4940 Bascharage (LU)
(72) Inventor: DUQUESNE, Arnaud, F-28230 Epernon (FR); MULOT, Gérard, F-28210 Nogent-le-Roi (FR); DUARTE, Alberto, F-28210 Villemeux-sur-Eure (FR); AESCHBACHER, Michel, F-28300 Saint - Priest (FR)
(74) Representative: Delphi France SAS
(86) International application number: PCT/EP2012/059513
(87) International publication number: WO 2012/163736

(56) References cited:
- WO-A2-2008/096277
- US-A- 5 622 512
- US-A- 6 126 468

## Description

### FIELD OF THE INVENTION

The present invention relates to an electrical connector housing, in particular to the housing used in an electrical connector device for a vehicle electrical power charging system, and to a corresponding vehicle charging system. US5622512A discloses an electrical connector housing according to the preamble of claim 1.

The electrical power charging systems used for charging an electrical power vehicle usually comprise an electrical power inlet which is attached to the vehicle. When the user wants to recharge the vehicle accumulators, an electrical power link is connected between the vehicle power inlet and an electrical power socket of an electrical power station.

The connector housing, used for the power inlet or for the power socket, usually comprises a main portion provided with cavities in which the electrical contacts are received and protected against fingers introduction. The inlet is also provided with a peripheral cavity for guiding a complementary connector device.

A peripheral seal is used in that peripheral cavity between the power inlet and the complementary connector device. Very strong friction forces are exerted on that seal and the implementation space available for the seal in the peripheral cavity is very limited. So, the fixation of the peripheral seal is a critical issue.

One existing solution is to overmould an elastomeric seal directly on the connector body. A drawback of such fixation is that the assembly process is long and expensive.

The invention remedies to at least of the above drawbacks. A goal of the invention is to provide the connector housing with a peripheral seal which is securely fixed and which can be quickly assembled.

### SUMMARY OF THE INVENTION

According to the invention, the electrical connector housing, comprises:
- a connector body having a mating axis and including a main portion, the main portion comprising a plurality of electrical cavities, each of the electrical cavities being arranged to receive an electrical contact, the main portion including a radially outside face arranged to engage a peripheral wall of a complementary connector body,
- a peripheral seal attached to the connector body and surrounding the main portion, the peripheral seal having an annular portion arranged to cooperate with the peripheral wall of the complementary connector to be compressed perpendicularly to the mating axis for providing humidity seal between the connector body and the complementary connector body, and
- a seal holder attached to the connector body, the peripheral seal comprising a plurality of fixation extensions, each extending from the annular portion and being locked within a corresponding fixation cavity, said fixation cavity extending between the connector body and the seal holder.

The peripheral seal can first be manufactured separately from the connector body. Second, the fixation extension can be introduced into a recess portion of the fixation cavity which can be provided either on the connector body or on the seal holder. Third, the seal holder is attached to the connector body. This closes the fixation cavity with the fixation extension locked in it. Thanks to the above particular construction, the assembly method of the peripheral seal is much quicker than an overmoulding process. Thanks to the fixation extension, the fixation strength can be improved without being limited by the little space around the main portion.

In some other embodiments, one might also use one or more of the features as defined in dependant claims.

### BRIEF DESCRIPTION OF THE DRAWINGS

Other characteristics and advantages of the invention will readily appear from the following description of some of its embodiments, provided as a non-limitative example, and of the accompanying drawings.

On the drawings:
- Figure 1 is a perspective view of a connector device, viewed from the front side, including an embodiment of the electrical connector housing.
- Figure 2 is a perspective view of the connector body of the housing of Figure 1.
- Figure 3 is a perspective view of a seal holder of the housing of figure 1,
- Figure 4 is a perspective view of a peripheral seal of the housing of Figure 1.
- Figure 5 is a cut view of the device according to the plan V-V of Figure 1.
- Figure 5a is a detail of Figure 5.

### DETAILED DESCRIPTION

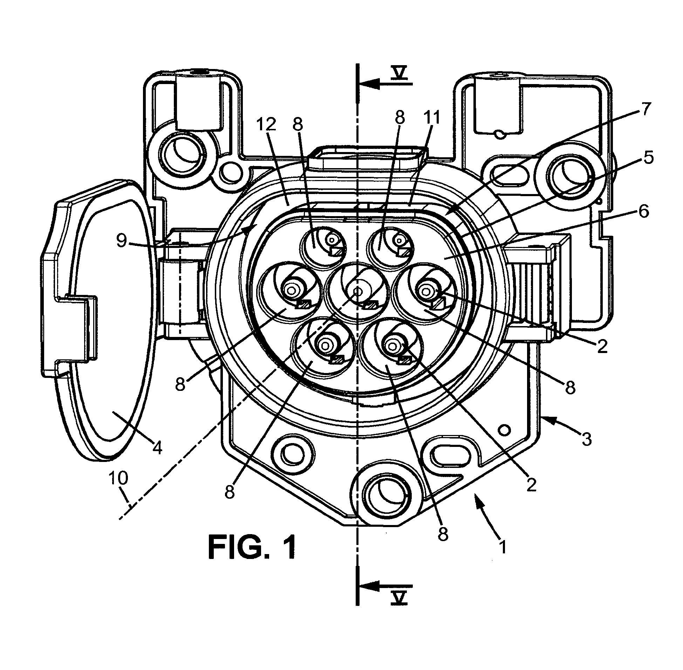

As illustrated in figure 1, the connector device comprises a connector housing 1 provided with seven electrical contacts 2. The connector housing 1 comprises a connector body 3, a shutter 4, a peripheral seal 5 and a seal holder 6.

The connector body 3 has a main portion 7 provided with seven electrical cavities 8, each of them surrounding one of the seven electrical contacts 2. The illustrated electrical contacts 2 are of a male type but they could also be of a female type. The electrical cavities 8 prevent a user finger from inadvertently touching the electrical contact 2.

The connector body 1 further comprises a peripheral cavity 9 surrounding the main portion 7, like a moat. That peripheral cavity 9 is adapted to receive an outside wall of a complementary connector body (not illustrated) which mates the connector body 1 following a mating axis 10. The main portion 7 axially protrudes from a back flange 12 such that the main portion 7 comprises a radially outside face 11. The back flange 12 extends at the bottom of the peripheral cavity 9 and extends towards a radial direction. The peripheral seal 5 is attached on the outside face 11 of the main portion 7.

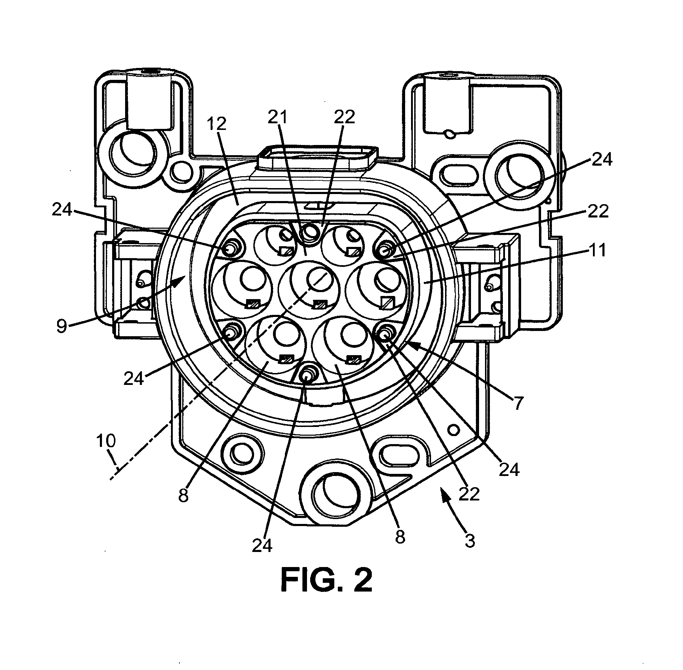

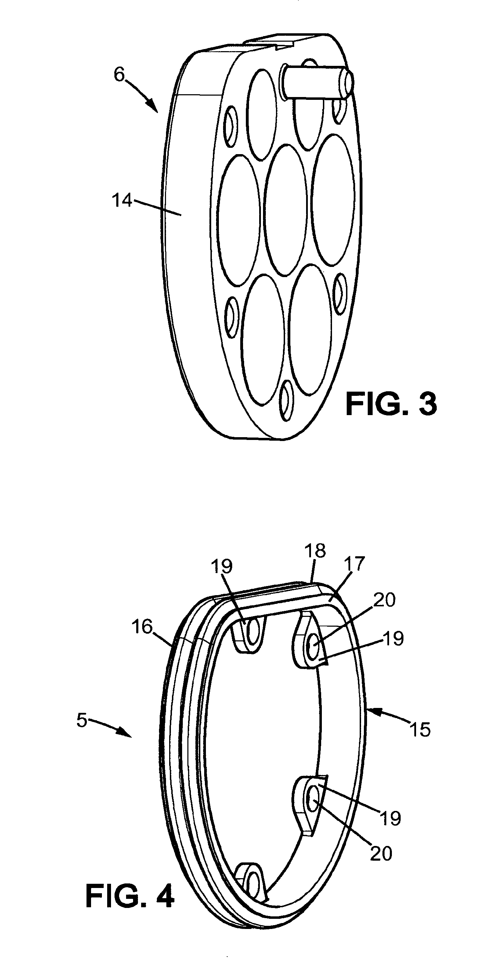

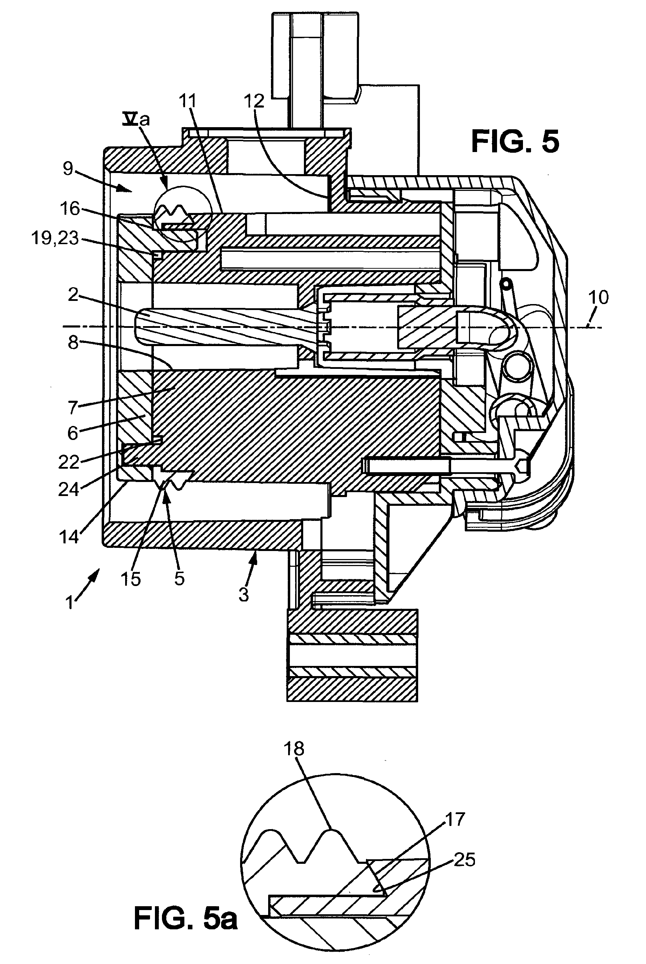

Thanks to Figures 2-5, the fixation of the peripheral seal 5 is now described. The seal holder 6 is attached to a front side 21 of the connector body 3. The seal holder 6 comprises a radially outside face 14 which extends in a radial position close to the radial position of the outside face 11 of the connector body 3. The peripheral seal 5 comprises an annular portion 15 extending about the mating axis 10. The annular portion 15 has a front side 16 and a back side 17. The front side 16 is substantially perpendicular to the mating axis 10. The annular portion 15 has an outside diameter 18 slightly protruding from the outside face 11 of the main portion 7 and from the outside face 14 of the seal holder 6. The peripheral seal 5 is axially sandwiched between the seal holder 6 and the main portion 7.

The peripheral seal 5 further comprises six fixation extensions 19, each of them extending radially towards the inside of the annular portion 15 and being flushed with the front side 16 of the annular portion 15. During the insertion of the peripheral wall of the complementary connector body along the peripheral seal 5, the axial friction of the wall on the seal 5 radially pulls the front side 16 outwards. The particular location of the fixation extension 19, flushing with the front side 16, prevents said front side 16 from being dug out from the connector body 3.

One of the electrical cavities 8 is a central cavity, centred on the central axis which is also the mating axis 10. The other electrical cavities 8 are external cavities which are distributed about the central axis 10.

The front side 21 further comprises recesses 22, each of them receiving one of the fixation extensions 19. When the seal holder 6 is attached to the connector body 3, the seal holder 6 closes the recesses 22, forming fixation cavities 23 which keep the fixation extensions 19 prisoner in them.

Each of the fixation cavities 23 is angularly and radially interposed between two adjacent external cavities. This means first, that the angular position of a particular recess 22 about the central axis 10 is between the angular position of a first external cavity and the angular position of a second external cavity which is adjacent to the first external cavity, and second that the radially inwards extremity of said recess 22 is closer to the central axis 10 than the radially outwards extremity of said first and second external cavities. Such an arrangement of the fixation cavities 23, interposed each between adjacent electrical cavities, is particularly interesting when the electrical cavities are substantially cylindrical. The spaces between two adjacent external cavities are used to provide a peripheral seal 5 with a robust attachment to the connector body 3.

In the illustrated embodiment, the attachment of each fixation extension 19 within the corresponding fixation cavity 23 is provided by a retention pin 24, parallel to the mating axis 10. Each of the retention pin 24 extends from one of the recess 22 of the connector body 3 or from the seal holder 6. Each of the fixation extension 19 is provided with a hole 20 which receives the retention pin 24.

As an improvement, the holes 20 are through holes. Some of the retention pins 24 can be moulded together with the connector body 3 and the opposite extremity of said retention pins is press-fitted into the seal holder 6. In that improvement, the retention pin 24 contributes to the attachment of the seal holder 6 with the connector body 3 in addition to the attachment of the fixation extensions 19 into the fixation cavities 23.

As illustrated in the detail 5a, the back side 17 of the peripheral seal 5 has a conical shape. The connector body 3 has a holding element 25 which holds the back side 17. The holding element 25 has also a conical shape and surrounds the back side 17 of the annular portion 15. Such holding element 25 prevents the peripheral seal 5 from being pulled out during the extraction of the complementary connector body from the connector body 3.

In another embodiment, the peripheral seal 5 may not be attached to the main portion 7. It may be attached to the wall of the peripheral cavity 9 facing the outside face 11 of the main portion 7. The fixation extension may therefore extend outwardly from the annular portion.

In another embodiment, the attachment of the fixation extension 19 into the fixation cavity 23 may not use the retention pin 24. The shape of the fixation cavity may retain a portion of the fixation extensions like a hook.

In another embodiment, a recess 22 may not be provided on the front side 21 of the connector body 3. The fixation cavity may consist of a recess provided in the seal holder 6. That recess is closed by the front side 21 of the connector body 3. Any combination of recesses according to that embodiment may be combined with recesses as illustrated by the figures. In any case, the fixation cavities 23 are between the connector body 3 and the seal holder 6.

In another embodiment, the connector body 3 may not comprise a peripheral cavity 9. The peripheral seal 5 extends on the outside face 11 of the main portion 7 and is axially located between the front side 21 and the back flange 12 of the connector body 3.

Other embodiments may combine any of the previous embodiments.

## Claims

1. Electrical connector housing (1), comprising:
- a connector body (3) having a mating axis (10) and including a main portion (7), the main portion comprising a plurality of electrical cavities (8), each of the electrical cavities being arranged to receive an electrical contact (2), the main portion (7) including a radially outside face (11) arranged to engage a peripheral wall of a complementary connector body;
- a peripheral seal (5) attached to the connector body (3) and surrounding the main portion (7), the peripheral seal having an annular portion (15) arranged to cooperate with the peripheral wall of the complementary connector to be compressed perpendicularly to the mating axis (10) for providing humidity seal between the connector body (3) and the complementary connector body; and a seal holder (6) attached to the connector body (3),
the peripheral seal comprising a plurality of fixation extensions (19), each extending from the annular portion (15) and being locked within a corresponding fixation cavity (23), the electrical connector housing (1) being **characterised in that** said fixation cavity (23) extends between the connector body (3) and the seal holder (6).

2. Electrical connector housing according to claim 1, wherein at least one fixation extension (19) comprises a hole (20) surrounding and adjusted to a retention pin (24), said retention pin being fixed to the corresponding fixation cavity (23).

3. Electrical connector housing according to claim 2, wherein the retention pin (24) extends parallel to the mating axis (10).

4. Electrical connector housing according to claim 2 or 3, wherein the hole (20) of the fixation extension (19) is a through hole and the retention pin (24) is fixed to both the connector body (3) and the seal holder (6).

5. Electrical connector housing according to any one of claims 2 to 4, wherein the retention pin (24) is moulded in one piece together with one of the connector body (3) and the seal holder (6).

6. Electrical connector housing according to claim 5, wherein the retention pin is press-fitted into the other one of the connector body (3) and the seal holder (6).

7. Electrical connector housing according to any one of preceding claims, wherein some of the electrical cavities (8) are distributed about a central axis (10), the retention cavities (23) being angularly and radially interposed between two of said electrical cavities which are adjacent.

8. Electrical connector housing according to any one of preceding claims, wherein the annular portion (15) comprises a front side (16) and a back side (17), axially opposite to each other along the mating axis (10), at least one of the fixation extensions (19) being flushed with the front side (16).

9. Electrical connector housing according to claim 8, wherein the connector body (3) comprises a holding element (25) designed for holding the back side (17) of the annular portion (15).

10. Electrical connector housing according to claim 9, wherein the holding element (25) is a conical surface surrounding said back side (17).

11. Electrical connector housing according to any one of preceding claims, wherein the seal holder (6) stands at a front side (21) of the main portion (7) of the connector body (3).

12. Electrical power charging system for vehicle, comprising:
- an electrical power station provided with an electrical power socket,
- an electrical power inlet adapted to be attached to the vehicle, and
- an electrical power link, provided at a first extremity with a plug adapted to mate with the electrical power socket and at a second extremity with a connector device adapted to mate with the electrical power inlet,
wherein at least one device taken in the group including the electrical power socket and the electrical power inlet, comprises an electrical connector housing (1) according any one of claims 1 to 11.

## Patentansprüche

1. Elektrisches Verbindergehäuse (1), das aufweist:
- einen Verbinderkörper (3) mit einer Verbindungsachse (10) und mit einem Hauptteil (7), wobei der Hauptteil eine Vielzahl von elektrischen Hohlräumen (8) aufweist, wobei jeder der elektrischen Hohlräume ausgebildet ist, einen elektrischen Kontakt (2) aufzunehmen, wobei der Hauptteil (7) eine radial äußere Fläche (11) umfasst, die ausgebildet ist, eine Umfangswand eines komplementären Verbinderkörpers zu kontaktieren;
- eine Umfangsdichtung (5), die an dem Verbinderkörper (3) angebracht ist und den Hauptteil (7) umgibt, wobei die Umfangsdichtung einen ringförmigen Teil (15) hat, der ausgebildet ist, mit der Umfangswand des komplementären Verbinders zusammenzuwirken, um senkrecht zu der Verbindungsachse (10) komprimiert zu werden, um eine Feuchtigkeitsdichtung zwischen dem Verbinderkörper (3) und dem komplementären Verbinderkörper vorzusehen; und
- einen Dichtungshalter (6), der an dem Verbinderkörper (3) angebracht ist, wobei die Umfangsdichtung eine Vielzahl von Befestigungserweiterungen (19) aufweist, die sich jeweils von dem ringförmigen Teil (15) erstrecken und in einem entsprechenden Befestigungshohlraum (23) arretiert sind, wobei das elektrische Verbindergehäuse (1) **dadurch gekennzeichnet ist, dass** sich der Befestigungshohlraum (23) zwischen dem Verbinderkörper (3) und dem Dichtungshalter (6) erstreckt.

2. Elektrisches Verbindergehäuse gemäß Anspruch 1, wobei zumindest eine Befestigungserweiterung (19) ein Loch (20) aufweist, das einen Haltestift (24) umgibt und an diesen angepasst ist, wobei der Haltestift an dem entsprechenden Befestigungshohlraum (23) befestigt ist.

3. Elektrisches Verbindergehäuse gemäß Anspruch 2, wobei sich der Haltestift (24) parallel zu der Verbindungsachse (10) erstreckt.

4. Elektrisches Verbindergehäuse gemäß Anspruch 2 oder 3, wobei das Loch (20) der Befestigungserweiterung (19) ein Durchgangsloch ist und der Haltestift (24) an sowohl dem Verbinderkörper (3) als auch dem Dichtungshalter (6) befestigt ist.

5. Elektrisches Verbindergehäuse gemäß einem der Ansprüche 2 bis 4, wobei der Haltestift (24) in einem Stück zusammen mit einem des Verbinderkörpers (3) und des Dichtungshalters (6) geformt ist.

6. Elektrisches Verbindergehäuse gemäß Anspruch 5, wobei der Haltestift in den anderen des Verbinderkörpers (3) und des Dichtungshalters (6) eingepresst ist.

7. Elektrisches Verbindergehäuse gemäß einem der vorhergehenden Ansprüche, wobei einige der elektrischen Hohlräume (8) um eine zentrale Achse (10) verteilt sind, wobei die Haltehohlräume (23) winkelförmig und radial zwischen zwei der elektrischen Hohlräume positioniert sind, die angrenzend sind.

8. Elektrisches Verbindergehäuse gemäß einem der vorhergehenden Ansprüche, wobei der ringförmige Teil (15) eine Vorderseite (16) und eine Rückseite (17) aufweist, die einander axial entlang der Verbindungsachse (10) gegenüber liegen, wobei zumindest eine der Befestigungserweiterungen (19) bündig mit der Vorderseite (16) ist.

9. Elektrisches Verbindergehäuse gemäß Anspruch 8, wobei der Verbinderkörper (3) ein Halteelement (25) aufweist, das ausgebildet ist zum Halten der Rückseite (17) des ringförmigen Teils (15).

10. Elektrisches Verbindergehäuse gemäß Anspruch 9, wobei das Halteelement (25) eine konische Oberfläche ist, die die Rückseite (17) umgibt.

11. Elektrisches Verbindergehäuse gemäß einem der vorhergehenden Ansprüche, wobei der Dichtungshalter (6) an einer Vorderseite (21) des Hauptteils (7) des Verbinderkörpers (3) steht.

12. Elektrisches Energieladesystem für ein Fahrzeug, das aufweist:
- eine elektrische Energiestation, die mit einer elektrischen Steckdose vorgesehen ist,
- einen elektrischen Energieeinlass, der ausgebildet ist, an dem Fahrzeug befestigt zu werden, und
- eine elektrische Energieverbindung, die an einem ersten Ende mit einem Stecker vorgesehen ist, der ausgebildet ist, mit der elektrischen Steckdose verbunden zu werden, und an einem zweiten Ende mit einer Verbindervorrichtung, die ausgebildet ist, mit dem elektrischen Energieeinlass verbunden zu werden,
wobei zumindest eine Vorrichtung in der Gruppe mit der elektrischen Steckdose und dem elektrischen Energieeinlass ein elektrisches Verbindergehäuse (1) gemäß einem der Ansprüche 1 bis 11 aufweist.

## Revendications

1. Boîtier pour connecteur électrique (1), comprenant :
- un corps de connecteur (3) ayant un axe d'accouplement (10) et incluant une portion principale (7), la portion principale comprenant une pluralité de cavités électriques (8), chacune des cavités électriques étant agencée pour recevoir un contact électrique (2), la portion principale (7) incluant une face radialement extérieure (11) agencée pour engager une paroi périphérique d'un corps de connecteur complémentaire ;
- un joint périphérique (5) attaché au corps de connecteur (3) et entourant la portion principale (7), le joint périphérique ayant une portion annulaire (15) agencée pour coopérer avec la paroi périphérique du connecteur complémentaire de manière à être comprimé perpendiculairement à l'axe d'accouplement (10) pour assurer un joint vis-à-vis de l'humidité entre le corps de connecteur (3) et le corps de connecteur complémentaire ; et
un porte-joint (6) attaché au corps de connecteur (3), le joint périphérique comprenant une pluralité d'extensions de fixation (19) qui s'étendent chacune depuis la portion annulaire (15) et qui sont bloquées à l'intérieur d'une cavité de fixation (23) correspondante, le boîtier de connecteur électrique (1) étant **caractérisé en ce que** ladite cavité de fixation (23) s'étend entre le corps de connecteur (3) et le porte-joint (6).

2. Boîtier pour connecteur électrique selon la revendication 1,
dans lequel au moins une extension de fixation (19) comprend un trou (20) qui entoure et qui est ajusté à une tige de rétention (24), ladite tige de rétention étant fixée à la cavité de fixation correspondante (23).

3. Boîtier pour connecteur électrique selon la revendication 2,
dans lequel la tige de rétention (24) s'étend parallèlement à l'axe d'accouplement (10).

4. Boîtier pour connecteur électrique selon la revendication 2 ou 3, dans lequel le trou (20) de l'extension de fixation (19) est un trou traversant et la tige de rétention (24) est fixée à la fois au corps de connecteur (3) et au porte-joint (6).

5. Boîtier pour connecteur électrique selon l'une quelconque des revendications 2 à 4, dans lequel la tige de rétention (24) est moulée d'une seule pièce ensemble avec un élément parmi le corps de connecteur (3) et le porte-joint (6).

6. Boîtier pour connecteur électrique selon la revendication 5, dans lequel la tige de rétention est engagée à la presse dans l'autre élément parmi le corps de connecteur (3) et le porte-joint (6).

7. Boîtier pour connecteur électrique selon l'une quelconque des revendications précédentes, dans lequel certaines des cavités électriques (8) sont distribuées autour d'un axe central (10), les cavités de rétention (23) étant interposées angulairement et radialement entre deux desdites cavités électriques qui sont adjacentes.

8. Boîtier pour connecteur électrique selon l'une quelconque des revendications précédentes, dans lequel la portion annulaire (15) comprend un côté frontal (16) et un côté dorsal (17), axialement opposés l'un à l'autre le long de l'axe d'accouplement (10), l'une au moins des extensions de fixation (19) étant en affleurement avec le côté frontal (16).

9. Boîtier pour connecteur électrique selon la revendication 8,
dans lequel le corps de connecteur (3) comprend un élément de maintien (25) conçu pour maintenir le côté dorsal (17) de la portion annulaire (15).

10. Boîtier pour connecteur électrique selon la revendication 9, dans lequel l'élément de maintien (25) est une surface conique entourant ledit côté dorsal (17).

11. Boîtier pour connecteur électrique selon l'une quelconque des revendications précédentes, dans lequel le porte-joint (6) est dressé sur un côté frontal (21) de la portion principale (7) du corps de connecteur (3).

12. Système de charge de puissance électrique pour véhicule, comprenant :
- une station de puissance électrique équipée d'un socle de puissance électrique,
- une arrivée de puissance électrique adaptée à être attachée au véhicule, et
- une ligne de puissance électrique, équipée à une première extrémité d'une prise adaptée à être accouplée avec le socle de puissance électrique et équipée à une seconde extrémité d'un dispositif connecteur adapté à être accouplé avec l'arrivée de puissance électrique,
dans lequel au moins un dispositif, pris dans le groupe incluant le socle de puissance électrique et l'arrivée de puissance électrique, comprend un boîtier pour connecteur électrique (1) selon l'une quelconque des revendications 1 à 11.
